# EUROPÄISCHE PATENTANMELDUNG

(11) **EP 4 775 451 A2**
(43) Veröffentlichungstag der Anmeldung: **15.07.2026**
(21) Anmeldenummer: 26181353.9
(22) Anmeldetag: 04.06.2020
(51) Int. Cl.: B60Q 3/208

(54) **VORRICHTUNG ZUR INNENRAUMLÜFTUNG FÜR EIN KRAFTFAHRZEUG**

(30) Priorität: 13.06.2019 DE 102019004227
(62) Teilanmeldung aus: 20732145.6
(71) Anmelder: MAN Truck & Bus SE, 80995 München (DE)
(72) Erfinder: Schmitz, Andreas, 80995 München (DE)
(74) Vertreter: v. Bezold & Partner Patentanwälte - PartG mbB

(57) **Zusammenfassung**

Die Erfindung betrifft eine Vorrichtung (12) zur Innenraumlüftung, vorzugsweise Dachlukenvorrichtung, für ein Kraftfahrzeug. Die Vorrichtung (12) weist einen Rahmen (16) mit einer Belüftungsöffnung (44), ein erstes Drehelement (28) zum Auf- und Abrollen eines ersten Rollos (30) und ein zweites Drehelement (32) zum Auf- und Abrollen eines zweiten Rollos (34) auf. Das erste Drehelement (28) und das zweite Drehelement (32) sind auf einer gemeinsamen Seite bezüglich der Belüftungsöffnung (44) und bezüglich einer Vertikalachse zumindest teilweise überlappend miteinander angeordnet. Die Vorrichtung (12) kann somit vorzugsweise besonders flachbauend ausgeführt sein, um ein Kopffreiheit nicht einzuschränken.

## Beschreibung

Die Erfindung betrifft eine Vorrichtung zur Innenraumlüftung, vorzugsweise Dachlukenvorrichtung, für ein Kraftfahrzeug, vorzugsweise ein Nutzfahrzeug.

Lastkraftwagen-Fahrerhauskabinen besitzen zum Großteil öffenbare Dachluken zur Be- und Entlüftung der Fahrerhauskabine. Wenn diese Dachluke transparent ausgeführt ist, kann es sinnvoll sein, die transparente Fläche abzuschatten. Einerseits können der Fahrer/die Insassen so vor Sonnenblendungen geschützt werden. Andererseits kann die Fahrerhauskabine gegen Erwärmung geschützt werden. Darüber hinaus kann ein Bedarf dahingehend bestehen, dass bei geöffneter Dachluke ein Eindringen von Insekten vermieden wird. Es ist ferner möglich, im Bereich des Dachhimmels der Fahrerhauskabine eine Innenraumbeleuchtung vorzusehen, die für die Beleuchtung der Fahrerhauskabine genutzt wird.

Die DE 10 2007 025 145 A1 offenbart ein mehrteiliges Panoramadach für Lastkraftwagen mit besseren Lichtverhältnissen in einem Fahrerhaus und einem erweiterten Raumgefühl für den Fahrer und die Passagiere. Das Panoramadach kann durch ein Verdunkelungsrollo vor Sonnenstrahlung abgeschirmt werden. Die zu öffnende Dachluke des Panoramadachs ist zusätzlich durch ein Fliegenschutzgitter vor dem ungewollten Eindringen von Insekten geschützt.

Der Erfindung liegt die Aufgabe zu Grunde, eine alternative und/oder verbesserte Vorrichtung zur Innenraumbelüftung insbesondere für ein Kraftfahrzeug zu schaffen.

Die Aufgabe wird gelöst durch die Merkmale des unabhängigen Anspruchs 1. Vorteilhafte Weiterbildungen sind in den abhängigen Ansprüchen und der Beschreibung angegeben.

Die Erfindung schafft eine Vorrichtung zur Innenraumlüftung, vorzugsweise Dachlukenvorrichtung, für ein Kraftfahrzeug, vorzugsweise Nutzfahrzeug (z.B. Lastkraftwagen oder Omnibus). Die Vorrichtung weist einen (z.B. rechteckförmigen) Rahmen mit einer (z.B. zentralen) Belüftungsöffnung (bzw. Be- und Entlüftungsöffnung) auf. Die Vorrichtung weist ein erstes Drehelement (z.B. Aufwickelrolle) zum Auf- und Abrollen eines ersten Rollos, das an dem ersten Drehelement angebracht ist, zum wahlweisen Freigeben oder Verdecken der Belüftungsöffnung auf. Die Vorrichtung weist ein zweites Drehelement (z.B. Aufwickelrolle) zum Auf- und Abrollen eines zweiten Rollos, das an dem zweiten Drehelement angebracht ist, zum wahlweisen Freigeben oder Verdecken der Belüftungsöffnung auf. Das erste Drehelement und das zweite Drehelement sind auf einer gemeinsamen (gleichen) Seite bezüglich der Belüftungsöffnung und (z.B. in einer Einbausituation) bezüglich einer (gedachten) Vertikalachse zumindest teilweise überlappend miteinander angeordnet.

Die Vorrichtung kann den Vorteil bieten, dass sie den nur knappen Bauraum zur Unterbringung der Drehelemente optimal nutzt. Die Vorrichtung kann möglichst wenig nach unten aufbauen, da die Drehelemente nebeneinander und nicht übereinander angeordnet sind. Damit wird die Stehhöhe im Fahrerhaus eines Lastkraftwagens bspw. nicht eingeschränkt. Zusätzlich kann der transparente Bereich der Dachluke möglichst wenig durch die Drehelemente verdeckt werden.

In einem Ausführungsbeispiel sind das erste Drehelement und das zweite Drehelement im Wesentlichen auf gleicher Höhe angeordnet. Es ist möglich, dass das erste Drehelement und das zweite Drehelement bezüglich einer (gedachten) Horizontalachse nebeneinander angeordnet sind. Es ist auch möglich, dass das erste Rollo oberhalb von dem zweiten Rollo abrollbar ist. Die Vorrichtung kann so den benötigten Bauraum in Vertikalrichtung so weit wie möglich reduzieren, ohne dass auf ein Rollo verzichtet werden müsste.

In einem weiteren Ausführungsbeispiel weist die Vorrichtung einen Abstandhalter auf, der über, vorzugsweise direkt oberhalb von, dem zweiten Drehelement angeordnet ist, zum Führen des ersten Rollos beabstandet von dem zweiten Rollo und/oder dem zweiten Drehelement. Der Abstandhalter kann ein Reiben oder Schleifen der Rollos aneinander verhindern. Beispielsweise kann verhindert werden, dass ein oben angeordnetes Fliegengitterrollo auf einem zweckmäßig beschichteten unteren Abschattungsrollo reibt. Damit kann eine Beschädigung durch Abrieb verhindert werden.

In einer Weiterbildung ist der Abstandhalter steg-, stab-, leisten- oder balkenförmig, vorzugsweise in einer Richtung parallel zu dem ersten Drehelement und/oder dem zweiten Drehelement. Damit kann der Abstandhalter bspw. über eine gesamte Breite der Rollos eine Beabstandung zwischen den Rollos gewährleisten.

In einem weiteren Ausführungsbeispiel ist der Abstandhalter rampenförmig, vorzugsweise in einer Richtung weg von dem ersten Drehelement. Damit kann das erste Rollo bspw. zu einer seitlichen Führung für das erste Rollo geführt werden, die höher als das erste Drehelement angeordnet ist.

In einem weiteren Ausführungsbeispiel ist der Abstandhalter dazu ausgebildet, das erste Rollo von unten zu führen, vorzugsweise mittels einer oberseitigen Gleitfläche. Damit kann eine Beschädigung des ersten Rollos beim Entlanggleiten an dem Abstandhalter verhindert werden.

In einer Ausführungsform weist die Vorrichtung eine Innenraumbeleuchtung auf, die vorzugsweise auf einer gegenüberliegenden Seite der Belüftungsöffnung bezüglich des ersten und zweiten Drehelements angeordnet ist. Zweckmäßig kann die Vorrichtung ferner ein Spritzschutzelement zum Fernhalten von in die Vorrichtung von oben eindringender Flüssigkeit (z.B. Regenwasser durch eine geöffnete Luke der Vorrichtung) von der Innenraumbeleuchtung aufweisen. Bspw. kann das Spritzschutzelement beabstandet zu der Innenraumbeleuchtung oberhalb von der Innenraumbeleuchtung angeordnet sein. Das Spritzschutzelement kann die in der Dachlukenverkleidung befestigte Innenraumbeleuchtung gegen eventuell eindringendes Wasser bei geöffneter Dachluke schützen.

In einer Weiterbildung weist die Vorrichtung eine Abdeckung (z.B. ein Verkleidungsteil) auf, die bspw. von unten an dem Rahmen angebracht ist. Die Abdeckung kann eine Ausnehmung (z.B. Montageöffnung) aufweisen, in der die Innenraumbeleuchtung angeordnet ist. Bspw. kann die Abdeckung ferner einen die Ausnehmung umlaufenden (z.B. stegförmigen) Vorsprung zum Fernhalten von in die Vorrichtung von oben eindringender Flüssigkeit (z.B. Regenwasser) von der Innenraumbeleuchtung aufweisen.

In einer weiteren Ausführungsform ist das Spritzschutzelement so, vorzugsweise abschüssig (z.B. weg von der Belüftungsöffnung abschüssig), geformt, dass auf einer Oberseite des Spritzschutzelements befindliche Flüssigkeit (z.B. Regenwasser) in einen Bereich außen von dem umlaufenden Vorsprung geleitet wird. Damit kann die Flüssigkeit besonders sicher daran gehindert werden, die Innenraumbeleuchtung zu erreichen.

In einer weiteren Ausführungsform ist der Abstandhalter und/oder das Spritzschutzelement integral-einstückig mit dem Rahmen ausgebildet, vorzugsweise mittels (z.B. Kunststoff-) Spritzguss. Damit müssen keine extra Zusatzbauteile für diese Funktionen vorgesehen und angebracht werden. Zusätzlich können der Abstandhalter und/oder das Spritzschutzelement eine Steifigkeit des Rahmens erhöhen.

In einer Ausführungsvariante weist der Rahmen einen Rahmenschenkel mit einer Grifföffnung zum Handhaben des Rahmens während einer Montage des Rahmens auf. Vorzugsweise kann die Grifföffnung auf einer gegenüberliegenden Seite der Belüftungsöffnung bezüglich des ersten und zweiten Drehelements angeordnet sein. Damit kann der Rahmen beim Transport/Handling gezielt gegriffen werden, ohne eine Beschädigung an der Kinematik, d.h. den Drehelementen, zu riskieren.

In einer weiteren Ausführungsvariante weist die Vorrichtung ferner eine (z.B. manuell oder automatisch) bewegbare (z.B. transparente) Luke, vorzugsweise Dachluke, auf.

In einer Weiterbildung weist die Vorrichtung eine Antriebseinheit zum Öffnen und/oder Schließen der Luke auf. Vorzugsweise kann die Antriebseinheit zumindest teilweise in der Grifföffnung angeordnet sein. Damit wird durch die Grifföffnung für den Transport usw. kein Bauraum verschwendet. Stattdessen kann die Grifföffnung funktionsintegriert auch als Aufnahmeraum für die Antriebseinheit im montierten Zustand dienen.

Zweckmäßig kann der Rahmen mit dem daran montierten ersten Drehelement und zweiten Drehelement (zusammen mit dem ersten und zweiten Rollo) eine Vormontageeinheit bilden.

In einem Ausführungsbeispiel weist der Rahmen einen Rahmenschenkel, vorzugsweise quer zu dem ersten und zweiten Drehelement, auf. Vorzugsweise ist an dem Rahmenschenkel eine Steuereinheit für eine Antriebseinheit einer Luke der Vorrichtung angebracht. Der Rahmen kann so mit der daran montierten Steuereinheit eine möglichst umfassende Vormontageeinheit bilden.

Vorzugsweise kann sich der Begriff "Steuereinheit" auf eine Elektronik (z. B. mit Mikroprozessor(en) und Datenspeicher) und/oder mechanische Steuerung beziehen, die je nach Ausbildung Steuerungsaufgaben und/oder Regelungsaufgaben übernehmen kann. Auch wenn hierin der Begriff "Steuern" verwendet wird, kann damit gleichsam zweckmäßig auch "Regeln" bzw. "Steuern mit Rückkopplung" umfasst sein.

In einem weiteren Ausführungsbeispiel ist das zweite Rollo an dem ersten Rollo haltbar, vorzugsweise zum gemeinsamen Auf- und/oder Abrollen und/oder zum Halten des zweiten Rollos in einem Ausrollzustand.

In einer Weiterbildung weist das zweite Rollo ein Griffelement, vorzugsweise eine Griffleiste, auf, das an einem Griffelement, vorzugsweise einer Griffleiste, des ersten Rollos haltbar ist. In einer Ausführungsform ist das erste Rollo und/oder das zweite Rollo ein Insektenschutzrollo, vorzugsweise ein Insektenschutzgitterrollo, und/oder ein Abdunkelungsrollo oder Abschattungsrollo.

In einer weiteren Ausführungsform sind das erste Drehelement und das zweite Drehelement parallel zueinander angeordnet.

In einer weiteren Ausführungsform ist das erste Drehelement und/oder das zweite Drehelement drehbar am Rahmen gelagert.

Es ist möglich, dass der Rahmen zwei einander gegenüberliegende, erste Führungen, vorzugsweise Führungsschienen oder Führungsnuten, zum Führen des ersten Rollos aufweist. Alternativ oder zusätzlich kann der Rahmen zwei einander gegenüberliegende, zweite Führungen, vorzugsweise Führungsschienen oder Führungsnuten, zum Führen des zweiten Rollos aufweisen. Vorzugsweise können die zwei ersten Führungen über den zwei zweiten Führungen angeordnet sein.

Die Erfindung betrifft auch ein Kraftfahrzeug, vorzugsweise ein Nutzfahrzeug (z.B. Lastkraftwagen oder Omnibus). Das Kraftfahrzeug weist eine Vorrichtung wie hierin offenbart auf, die vorzugsweise so angeordnet ist, dass das erste und zweite Drehelement bezüglich einer Vorwärtsfahrtrichtung des Kraftfahrzeugs vor der Belüftungsöffnung und/oder an einer in Vorwärtsfahrtrichtung des Kraftfahrzeugs gewandten Seite der Vorrichtung angeordnet ist.

Bevorzugt ist die Vorrichtung eine Lastkraftwagen-Dachlukenvorrichtung für ein Lastkraftwagen-Fahrerhaus.

Es ist auch möglich, die Vorrichtung wie hierin offenbart für Personenkraftwagen, geländegängige Fahrzeuge oder Wohnwagen zu verwenden.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine perspektivische Ansicht eines Dachbereichs eines Nutzfahrzeugs;
- Figur 2: eine Draufsicht auf den Dachbereich von Figur 1;
- Figur 3: eine ausschnittsweise Schnittansicht entlang einer Linie A-A in Figur 2;
- Figur 4: eine ausschnittsweise Schnittansicht entlang einer Linie B-B in Figur 2;
- Figur 5: eine Schnittansicht in einer Ebene parallel zu der Linie A-A in Figur 2 bzw. parallel zu der Schnittansicht von Figur 3;
- Figur 6: eine perspektivische Ansicht von unten auf einen Teil einer Vorrichtung zur Innenraumlüftung für ein Kraftfahrzeug gemäß einem Ausführungsbeispiel der vorliegenden Offenbarung; und
- Figur 7: eine perspektivische Ansicht von oben auf den beispielhaften Teil der Vorrichtung zur Innenraumbelüftung.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

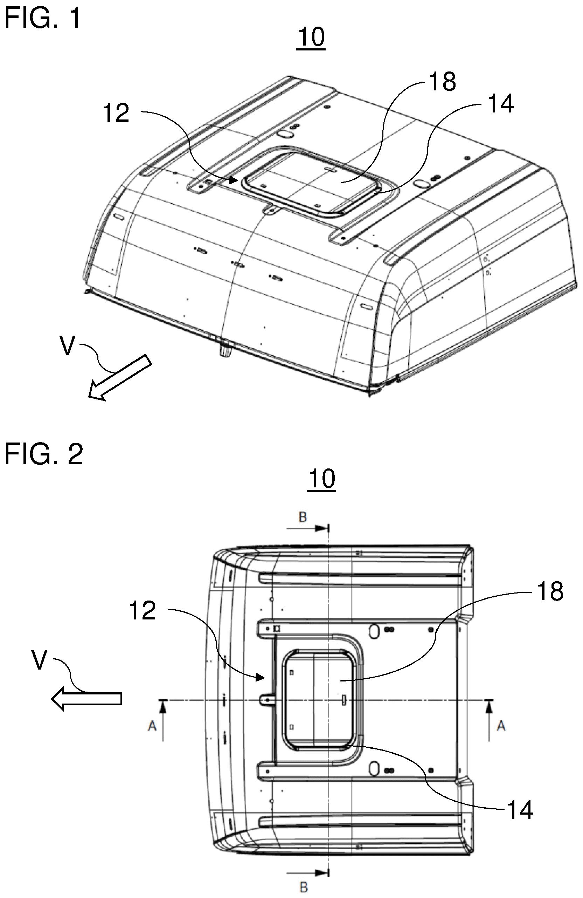

Die Figuren 1 und 2 zeigen einen Dachbereich 10 eines Kraftfahrzeugs. Eine Vorwärtsfahrtrichtung des Kraftfahrzeugs ist mit einem Pfeil V gekennzeichnet. Der Dachbereich 10 weist eine Vorrichtung 12 zur Innenraumlüftung (Be- und Entlüftung) auf. Im Einzelnen handelt es sich bei dem Dachbereich 10 im gezeigten Ausführungsbeispiel um einen Dachbereich einer Lastkraftwagen-Fahrerkabine. Die Vorrichtung 12 dient somit zur dachseitigen Fahrerhauslüftung eines Fahrerhauses. Die Vorrichtung 12 ist als eine Dachlukenvorrichtung ausgeführt. Es ist möglich, die Vorrichtung 12 in einer anderen Umgebung anzuwenden, zum Beispiel bei einem anderen Fahrzeug, wie beispielsweise einem Personenkraftwagen oder einem Campingwagen.

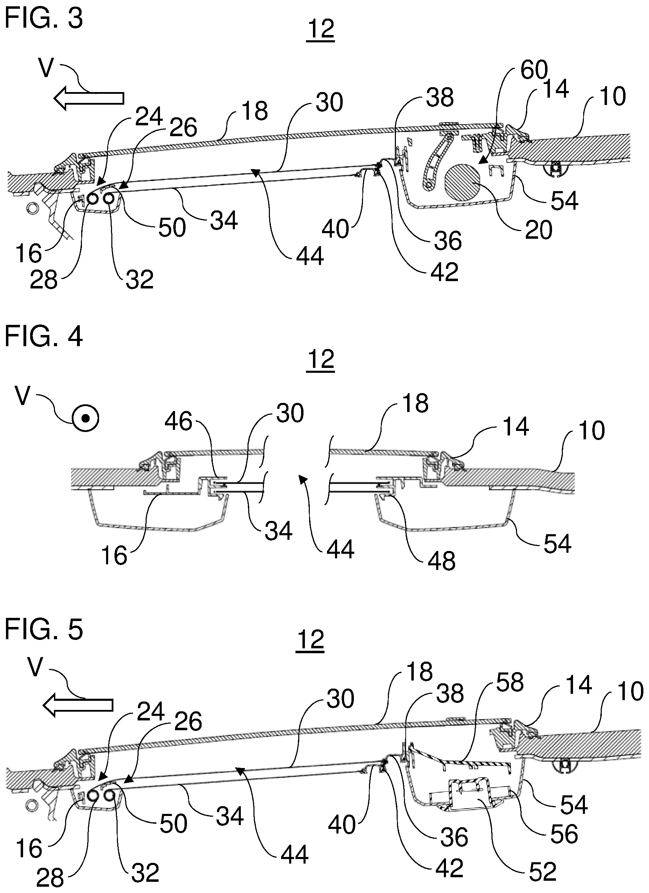

Die Figuren 3 bis 7 stellen die Vorrichtung 12 in größerem Detail dar.

Die Vorrichtung 12 ist an einer Öffnung im Dachbereich 10 montiert. Im Einzelnen weist die Vorrichtung 12 einen ersten Rahmen 14 und einen zweiten Rahmen 16 auf. Der erste Rahmen 14 ist auf einer Oberseite des Dachbereichs 10 abdichtend befestigt. Der zweite Rahmen 16 ist auf einer Unterseite des Dachbereichs 10 befestigt. Zweckmäßig ist der zweite Rahmen 16 als eine Interieurkomponente am Dachhimmel eines Fahrerhauses angeordnet. Der erste und zweite Rahmen 14 und 16 können beispielsweise gegeneinander verschraubt sein. Der erste und/oder zweite Rahmen 14, 16 können im Wesentlichen rechteckförmig ausgeführt sein. Der erste und/oder der zweite Rahmen 14, 16 können zweckmäßig Kunststoffteile sein, vorzugsweise hergestellt mittels Kunststoff-Spritzguss.

In einer zentralen Öffnung des ersten Rahmens 14 ist eine bewegbare, vorzugsweise schwenk- bzw. kippbare und/oder verschiebbare, (Dach-)Luke 18, positioniert. Vorzugsweise kann die Luke 18 automatisch geöffnet und geschlossen werden. Zum automatischen Bewegen der Luke 18 kann eine beispielsweise elektrische Antriebseinheit 20 (siehe Figur 3) umfasst sein. Die elektrische Antriebseinheit 20 kann antreibend mit der Luke 18 verbunden sein, zum Beispiel über einen Schwenkhebel o.dgl.

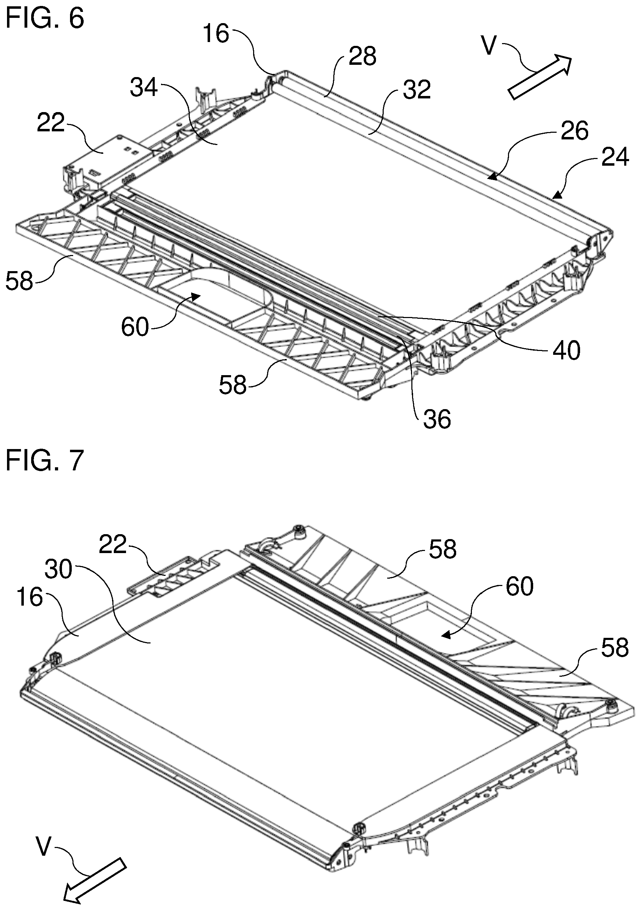

Die Antriebseinheit 20 kann von einer Steuereinheit 22 (siehe Figur 6 und 7) betrieben werden. Die Steuereinheit 22 kann ebenfalls in der Vorrichtung 12 umfasst sein. Zweckmäßig ist die Steuereinheit 22 an dem zweiten Rahmen 16 angebracht, sodass der zweite Rahmen 16 mit den daran montierten Komponenten eine möglichst umfassende Vormontageeinheit bilden kann. Es ist allerdings auch möglich, dass die Luke 18 manuell zu öffnen und zu schließen ist.

Die Vorrichtung 12 weist eine erste Rolloeinrichtung 24 und eine zweite Rolloeinrichtung 26 auf. Die erste Rolloeinrichtung 24 weist ein erstes Drehelement 28 und ein erstes Rollo 30 auf. Die zweite Rolloeinrichtung 26 weist ein zweites Drehelement 32 und ein zweites Rollo 34 auf. Das erste Drehelement 28 und das zweite Drehelement 32 ist jeweils stangenförmig geformt. Das erste Drehelement 28 und das zweite Drehelement 32 sind jeweils drehbar an dem zweiten Rahmen 16 gelagert. Die Drehelemente 28, 32 sind zweckmäßig jeweils als ein Aufwickelrolle ausgeführt. Die Rollos 30, 34 sind zweckmäßig als wickelbare, z.B. rechteckförmige, Stoffe, Gewebe, Folien o. dgl. ausgeführt. Die Drehelemente 28, 32 können von unten mittels einer Abdeckung, die an dem zweiten Rahmen 16 angebracht ist, verkleidet sein.

Das erste Rollo 30 ist an einer ersten Endseite an dem ersten Drehelement 28 angebracht, vorzugsweise befestigt. Auf einer entgegengesetzten Endseite weist das erste Rollo 30 ein Griffelement 36 in Form einer Griffleiste auf. Das erste Rollo 30 kann auf dem ersten Drehelement 28 aufgerollt und von dem ersten Drehelement 28 abgerollt werden. Das erste Rollo 30 kann an dem Griffelement 36 gegriffen und manuell von dem ersten Drehelement 28 abgerollt werden. Das Griffelement 36 kann an einer Halterung 38 des zweiten Rahmens 16 lösbar gehalten werden, um das erste Rollo 30 im abgerollten Zustand zu halten. Beispielsweise kann das Griffelement 36 in die Halterung 38 eingehakt werden.

Das erste Drehelement 28 kann in eine Drehrichtung zum Aufrollen des ersten Rollos 30 vorgespannt, vorzugsweise federvorgespannt, sein. Das erste Rollo 30 kann zweckmäßig ein Insektenschutzgitterrollo sein. Im abgerollten Zustand kann das Insektenschutzgitterrollo ein Eindringen von Insekten durch die geöffnete Luke 18 in den Innenraum des Kraftfahrzeugs verhindern.

Das zweite Rollo 34 ist an einer ersten Endseite an dem zweiten Drehelement 32 angebracht, vorzugsweise befestigt. Auf einer entgegengesetzten Endseite weist das zweite Rollo 34 ein Griffelement 40 in Form einer Griffleiste auf. Das zweite Rollo 34 kann auf dem zweiten Drehelement 32 aufgerollt und von dem zweiten Drehelement 32 abgerollt werden. Das zweite Rollo 34 kann an dem Griffelement 40 gegriffen und manuell von dem zweiten Drehelement 32 abgerollt werden. Das Griffelement 40 kann an einer Halterung 42 des ersten Rollos 30, vorzugsweise dem Griffelement 36 des ersten Rollos 30, lösbar gehalten werden. So kann das zweite Rollo 34 im abgerollten Zustand gehalten werden oder gemeinsam mit dem ersten Rollo 30 abgerollt oder aufgerollt werden. Beispielsweise kann das Griffelement 40 in die Halterung 42 eingehakt werden.

Das zweite Drehelement 32 kann in eine Drehrichtung zum Aufrollen des zweiten Rollos 34 vorgespannt, vorzugsweise federvorgespannt, sein. Das zweite Rollo 34 kann zweckmäßig ein Abdunkelungs- oder Abschattungsrollo sein. Im abgerollten Zustand kann das zweite Rollo ein Eindringen von Sonnenstrahlen durch die transparente Luke 18 in den Innenraum des Kraftfahrzeugs verhindern.

Wie beschrieben, können die Rollos 30, 34 manuell geöffnet werden. Es ist allerdings auch möglich, dass das erste Rollo 30 und/oder das zweite Rollo 34 automatisch mittels einer jeweiligen Antriebseinheit (nicht gezeigt) auf- und abrollbar sind. Die Antriebseinheit(en) kann/können bspw. antreibend mit dem ersten Drehelement 28 und/oder dem zweiten Drehelement 32 verbunden sein.

Der zweite Rahmen 16 weist eine Belüftungsöffnung 44 auf. Die Belüftungsöffnung 36 ist unterhalb der Luke 18, die geöffnet werden kann, angeordnet. Im aufgerollten Zustand können das erste Rollo 30 und das zweite Rollo 34 die Belüftungsöffnung 44 jeweils freigeben. Im abgerollten Zustand können das erste Rollo 30 und das zweite Rollo 34 die Belüftungsöffnung 44 jeweils abdecken. Die Figuren 3 bis 7 zeigen die Rollos 30, 34 jeweils im abgerollten Zustand.

Wie beispielsweise in Figur 4 dargestellt ist, können die Rollos 30, 34 beim Auf- und Abrollen jeweils beidseitig in seitlichen Führungen 46, 48 geführt sein. Die erste Führung 46 für das erste Rollo 30 ist direkt oberhalb von der zweiten Führung 48 für das zweite Rollo 34 angeordnet. Die Führungen 46, 48 können integral-einstückig mit dem zweiten Rahmen 16 ausgeführt sein. Die Führungen 46, 48 können beispielsweise als Führungsnuten oder Führungsschienen ausgeführt sein.

Die Drehelemente 28, 32 sind nebeneinander auf gleicher Höhe auf der gleichen Seite bezüglich der Belüftungsöffnung 44 angeordnet. Die Drehelemente 28, 32 sind in Vorwärtsfahrtrichtung V hintereinander auf der in die Vorwärtsfahrrichtung V gewandten Seite der Belüftungsöffnung 44 bzw. des zweiten Rahmens 16 angeordnet. Diese Hintereinanderanordnung der Drehelemente 28, 32 ermöglicht eine flachbauende Vorrichtung 12. Der Fahrgastinnenraum kann im oberen Bereich durch die Vorrichtung 12 so wenig wie möglich beschränkt werden. Dies kann sich vorteilhaft auf eine maximal mögliche Sitz- oder Stehhöhe im Kraftfahrzeug auswirken.

Wie in den Figuren 3 und 5 gezeigt, kann die Vorrichtung 12 einen Abstandhalter 50 aufweisen. Der Abstandhalter 50 beabstandet das erste Rollo 30 von dem zweiten Rollo 34 im Bereich des zweiten Drehelements 32. Der Abstandhalter 50 ist über dem zweiten Drehelement 32 angeordnet. Der Abstandhalter 50 ist parallel zu dem ersten Drehelement 28 und dem zweiten Drehelement 32 angeordnet. Der Abstandhalter50 ist auf der gleichen Seite bezüglich der Belüftungsöffnung 44 angeordnet wie die Drehelemente 28, 32. Der Abstandhalter 50 kann bspw. balken-, stab-, steg- oder leistenförmig sein und sich entlang einer gesamten Breite des ersten Rollos 30 erstrecken.

Der Abstandhalter 50 ist als ein Führungsstück oder Gleitstück ausgeführt. Der Abstandhalter 50 führt und stützt das erste Rollo 30 von unten. Das erste Rollo 30 kann über eine zweckmäßig glatte Oberseite des Abstandhalters 50 gleiten. Der Abstandhalter 50 kann verhindern, dass das erste Rollo 30 an dem zweiten Rollo 34 reibt oder schleift. So kann bspw. ein Rollogewebe oder eine Rollobeschichtung vor Beschädigung geschützt werden. Der Abstandhalter 50 kann rampenförmig in einer Richtung weg von dem ersten Drehelement 28 sein. Das erste Rollo 30 kann so zu den Führungen 46 geführt werden, die höher als das erste Drehelement 28 angeordnet sind. Der Abstandhalter 50 kann integral-einstückig mit dem zweiten Rahmen 16 ausgeführt sein, vorzugsweise angespritzt sein.

Wie in Figur 5 gezeigt, kann die Vorrichtung 12 eine Innenraumbeleuchtung 52 aufweisen. Mittels der Innenraumbeleuchtung 52 kann ein Fahrzeuginnenraum des Kraftfahrzeugs beleuchtet werden. Die Innenraumbeleuchtung 52 ist an einer Montageöffnung oder Ausnehmung einer Abdeckung (Verkleidung) 54 montiert. Die Abdeckung 54 ist von unten an dem zweiten Rahmen 16 befestigt.

Beabstandet zu der Montageöffnung kann die Abdeckung 54 innenseitig einen nach oben gerichteten, die Montageöffnung umlaufenden Vorsprung 56 aufweisen. Oberhalb von der Innenraumbeleuchtung 52 kann ein Spritzschutzelement 58 (siehe auch Figuren 6 und 7) angeordnet sein. Das Spritzschutzelement 58 ist so angeordnet und geformt, dass es verhindert, dass durch die geöffnete Luke 18 eindringende Flüssigkeit, wie zum Beispiel Regenwasser, die Innenraumbeleuchtung 52 erreicht. Flüssigkeit kann von oben auf eine Oberseite des Spritzschutzelements 58 tropfen. Die Oberseite erstreckt sich abfallend und leitet die eingedrungene Flüssigkeit in einen Bereich außen von dem umlaufenden Vorsprung 56. So kann die Elektrik der Innenraumbeleuchtung 52 vor der Flüssigkeit geschützt werden. Das Spritzschutzelement 58 kann integral-einstückig mit dem zweiten Rahmen 16 ausgeführt sein, vorzugsweise angespritzt sein. Das Spritzschutzelement 58 kann somit in Form einer Rahmenverlängerung ausgeführt sein, wodurch zudem die Steifigkeit des zweiten Rahmens 16 erhöht werden kann.

Wie in den Figuren 6 und 7 gezeigt ist, kann der zweite Rahmen 16 eine Grifföffnung 60 aufweisen. Mittels der Grifföffnung 60 kann der zweite Rahmen 16 während des Transports und der Montage beschädigungsfrei gehandhabt werden. Die Grifföffnung 60 kann in einem Rahmenschenkel des zweiten Rahmens 16 auf einer den Drehelementen 28, 32 gegenüberliegenden Seite des zweiten Rahmens 16 angeordnet sein. Die Grifföffnung 60 kann zentral in dem Rahmenschenkel angeordnet sein. Die Grifföffnung 60 kann mittig zwischen zwei Spritzschutzelementen 58, die jeweils eine Innenraumbeleuchtung 52 abdecken, angeordnet sein. Im montierten Zustand kann die Grifföffnung 60 dazu dienen, Bauraum für die Antriebseinheit 20 zu schaffen, die zumindest teilweise in der Grifföffnung 60 angeordnet sein kann.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen. Insbesondere sind die einzelnen Merkmale des unabhängigen Anspruchs 1 jeweils unabhängig voneinander offenbart. Zusätzlich sind auch die Merkmale der Unteransprüche unabhängig von sämtlichen Merkmalen des unabhängigen Anspruchs 1 und beispielsweise unabhängig von den Merkmalen bezüglich des Vorhandenseins und/oder der Konfiguration des Rahmens, des ersten Drehelements und/oder des zweiten Drehelements des unabhängigen Anspruchs 1 offenbart.

### Bezugszeichenliste

- 10: Dachbereich
- 12: Vorrichtung zur Innenraumlüftung
- 14: Erster Rahmen
- 16: Zweiter Rahmen
- 18: Luke
- 20: Antriebseinheit
- 22: Steuereinheit
- 24: Erste Rolloeinrichtung
- 26: Zweite Rolloeinrichtung
- 28: Erstes Drehelement
- 30: Erstes Rollo
- 32: Zweites Drehelement
- 34: Zweites Rollo
- 36: Griffelement
- 38: Halterung
- 40: Griffelement
- 42: Halterung
- 44: Belüftungsöffnung
- 46: Erste Führung
- 48: Zweite Führung
- 50: Abstandhalter
- 52: Innenraumbeleuchtung
- 54: Abdeckung
- 56: Vorsprung
- 58: Spritzschutzelement
- 60: Grifföffnung

## Patentansprüche

1. Vorrichtung (12) zur Innenraumlüftung, vorzugsweise Dachlukenvorrichtung, für ein Kraftfahrzeug, vorzugsweise Nutzfahrzeug, aufweisend:
einen Rahmen (16) mit einer Belüftungsöffnung (44);
ein erstes Drehelement (28) zum Auf- und Abrollen eines ersten Rollos (30), das an dem ersten Drehelement (28) angebracht ist, zum wahlweisen Freigeben oder Verdecken der Belüftungsöffnung (44);
ein zweites Drehelement (32) zum Auf- und Abrollen eines zweiten Rollos (34), das an dem zweiten Drehelement (32) angebracht ist, zum wahlweisen Freigeben oder Verdecken der Belüftungsöffnung (44),
wobei das erste Drehelement (28) und das zweite Drehelement (32) auf einer gemeinsamen Seite bezüglich der Belüftungsöffnung (44) und bezüglich einer Vertikalachse zumindest teilweise überlappend miteinander angeordnet sind,
wobei das erste Drehelement (28) und das zweite Drehelement (32) im Wesentlichen auf gleicher Höhe angeordnet sind,
wobei das erste Rollo (30) und/oder das zweite Rollo (34) ein Insektenschutzgitterrollo ist.

2. Vorrichtung (12) nach Anspruch 1, wobei:
das erste Drehelement (28) und das zweite Drehelement (32) bezüglich einer Horizontalachse nebeneinander angeordnet sind; und/oder
das erste Rollo (30) oberhalb von dem zweiten Rollo (34) abrollbar ist.

3. Vorrichtung (12) nach Anspruch 1 oder Anspruch 2, ferner aufweisend:
einen Abstandhalter (50), der über, vorzugsweise direkt oberhalb von, dem zweiten Drehelement (32) angeordnet ist, zum Führen des ersten Rollos (30) beabstandet von dem zweiten Rollo (34) und/oder dem zweiten Drehelement (32).

4. Vorrichtung (12) nach Anspruch 3, wobei:
der Abstandhalter (50) steg-, stab-, leisten- oder balkenförmig ist, vorzugsweise in einer Richtung parallel zu dem ersten Drehelement (28) und/oder dem zweiten Drehelement (32); und/oder
der Abstandhalter (50) rampenförmig ist, vorzugsweise in einer Richtung weg von dem ersten Drehelement (28); und/oder
der Abstandhalter (50) dazu ausgebildet ist, das erste Rollo (30) von unten zu führen, vorzugsweise mittels einer oberseitigen Gleitfläche.

5. Vorrichtung (12) nach einem der vorherigen Ansprüche, ferner aufweisend:
eine Innenraumbeleuchtung (52), die vorzugsweise auf einer gegenüberliegenden Seite der Belüftungsöffnung (44) bezüglich des ersten und zweiten Drehelements (28, 32) angeordnet ist; und
ein Spritzschutzelement (58) zum Fernhalten von in die Vorrichtung (12) von oben eindringender Flüssigkeit von der Innenraumbeleuchtung (52), wobei das Spritzschutzelement (58) beabstandet zu der Innenraumbeleuchtung (52) oberhalb von der Innenraumbeleuchtung (52) angeordnet ist.

6. Vorrichtung (12) nach Anspruch 5, ferner aufweisend:
eine Abdeckung (54), die von unten an dem Rahmen (16) angebracht ist, wobei die Abdeckung (54) eine Ausnehmung, in der die Innenraumbeleuchtung (52) angeordnet ist, und innenseitig einen die Ausnehmung umlaufenden Vorsprung (56) zum Fernhalten von in die Vorrichtung (12) von oben eindringender Flüssigkeit von der Innenraumbeleuchtung (52) aufweist.

7. Vorrichtung (12) nach Anspruch 6, wobei:
das Spritzschutzelement (58) so, vorzugsweise abschüssig, geformt ist, dass auf einer Oberseite des Spritzschutzelements (58) befindliche Flüssigkeit in einen Bereich außen von dem umlaufenden Vorsprung (56) geleitet wird.

8. Vorrichtung (12) nach einem der Ansprüche 3 bis 7, wobei:
der Abstandhalter (50) integral-einstückig mit dem Rahmen (16) ausgebildet ist, vorzugsweise mittels Spritzguss; und/oder
das Spritzschutzelement (58) integral-einstückig mit dem Rahmen (16) ausgebildet ist, vorzugsweise mittels Spritzguss.

9. Vorrichtung (12) nach einem der vorherigen Ansprüche, wobei:
der Rahmen (16) einen Rahmenschenkel mit einer Grifföffnung (60) zum Handhaben des Rahmens (16) während einer Montage des Rahmens (16) aufweist,
wobei vorzugsweise:
die Grifföffnung (60) auf einer gegenüberliegenden Seite der Belüftungsöffnung (44) bezüglich des ersten und zweiten Drehelements (28, 32) angeordnet ist.

10. Vorrichtung (12) nach einem der vorherigen Ansprüche, ferner aufweisend:
eine bewegbare Luke (18), vorzugsweise Dachluke; und
eine Antriebseinheit (20) zum Öffnen und/oder Schließen der Luke (18), wobei die Antriebseinheit (20) zumindest teilweise in der Grifföffnung (60) angeordnet ist.

11. Vorrichtung (12) nach einem der vorherigen Ansprüche, wobei:
der Rahmen (16) einen Rahmenschenkel, vorzugsweise quer zu dem ersten und zweiten Drehelement (28, 32), aufweist, an dem eine Steuereinheit (22) für eine Antriebseinheit (20) einer Luke (18) der Vorrichtung (12) angebracht ist.

12. Vorrichtung (12) nach einem der vorherigen Ansprüche, wobei:
das zweite Rollo (34) an dem ersten Rollo (30) haltbar ist, vorzugsweise zum gemeinsamen Auf- und/oder Abrollen und/oder zum Halten des zweiten Rollos (34) in einem Ausrollzustand.

13. Vorrichtung nach Anspruch 12, wobei:
das zweite Rollo (34) ein Griffelement (40), vorzugsweise eine Griffleiste, aufweist, das an einem Griffelement (36), vorzugsweise einer Griffleiste, des ersten Rollos (30) haltbar ist.

14. Vorrichtung (12) nach einem der vorherigen Ansprüche, wobei:
das erste Rollo (30) oder das zweite Rollo (34) ein Abdunkelungsrollo oder Abschattungsrollo ist; und/oder
das erste Drehelement (28) und das zweite Drehelement (32) parallel zueinander angeordnet sind; und/oder
das erste Drehelement (28) und/oder das zweite Drehelement (32) drehbar am Rahmen (16) gelagert ist.

15. Kraftfahrzeug, vorzugsweise Nutzfahrzeug, aufweisend:
eine Vorrichtung (12) nach einem der vorherigen Ansprüche, die vorzugsweise so angeordnet ist, dass das erste und zweite Drehelement (28, 32) bezüglich einer Vorwärtsfahrtrichtung (V) des Kraftfahrzeugs vor der Belüftungsöffnung (44) und/oder an einer in Vorwärtsfahrtrichtung (V) des Kraftfahrzeugs gewandten Seite der Vorrichtung (12) angeordnet ist.
